# EUROPÄISCHE PATENTSCHRIFT

(11) **EP 1 421 263 B1**
(45) Veröffentlichungstag und Bekanntmachung des Hinweises auf die Patenterteilung: **19.09.2007**
(21) Anmeldenummer: 02748584.6
(22) Anmeldetag: 11.06.2002
(51) Int. Cl.: F01L 9/04, F01L 3/10

(54) **LÖSBARE VERBINDUNG ZUM KUPPELN EINES GASWECHSELVENTILS EINER BRENNKRAFTMASCHINE MIT EINEM AKTOR**
DETACHABLE CONNECTION FOR COUPLING A GAS EXCHANGE VALVE OF AN INTERNAL COMBUSTION ENGINE TO AN ACTUATOR
LIAISON AMOVIBLE DESTINEE AU COUPLAGE D'UNE SOUPAPE D'ECHANGE DE GAZ D'UN MOTEUR A COMBUSTION INTERNE ET D'UN ACTIONNEUR

(30) Priorität: 22.08.2001 DE 10141176
(43) Veröffentlichungstag der Anmeldung: 26.05.2004
(73) Patentinhaber: ROBERT BOSCH GMBH, 70442 Stuttgart (DE)
(72) Erfinder: GAESSLER, Hermann, 71665 Vaihingen (DE); DIEHL, Udo, 70195 Stuttgart (DE); MISCHKER, Karsten, 71229 Leonberg (DE); WALTER, Rainer, 74385 Pleidelsheim (DE); BAUMANN, Andreas, 71706 Markgröningen (DE); FILP, Gerhard, 71691 Freiberg (DE); ROSENAU, Bernd, 71732 Tamm (DE); ULM, Jürgen, 71735 Eberdingen (DE); MOCKEN, Thomas, 74372 Sersheim (DE); TATIYOSYAN, Sevan, 74372 Sersheim (DE); SCHIEMANN, Jürgen, 71706 Markgröningen (DE); GROSSE, Christian, 70806 Kornwestheim (DE); MALLEBREIN, Georg, 70825 Korntal-Münchingen (DE); BEUCHE, Volker, 70372 Stuttgart (DE); REIMER, Stefan, 71706 Markgröningen (DE); KIESER, Simon, 74343 Sachsenheim (DE)
(86) Internationale Anmeldenummer: PCT/DE2002/002124
(87) Internationale Veröffentlichungsnummer: WO 2003/018969

(56) Entgegenhaltungen:
- DE-A- 10 010 272
- DE-A- 19 807 721
- DE-C- 19 810 465
- DE-C- 19 811 779
- US-A- 3 978 830

## Beschreibung

### Stand der Technik

Die Erfindung betrifft eine Verbindung eines Gaswechselventils einer Brennkraftmaschine mit einem Aktor nach dem Oberbegriff des Patentanspruchs 1.

Bei Brennkraftmaschinen, deren Gaswechselventile in herkömmlicher Weise über eine Nockenwelle betätigt werden, überträgt beispielsweise ein Tassenstößel, ein Schlapphebel oder ein Kipphebel die Steuerbewegung der Nockenwelle auf den Schaft des Gaswechselventils wenn dieses geöffnet werden soll. Eine zwischen Zylinderkopf und Gaswechselventil eingespannte Ventilfeder hält das Gaswechselventil stets in Anlage mit dem Tassenstößel, dem Schlepphebel oder dem Kipphebel. Außerdem dient die Ventilfeder zum Schließen des Gaswechselventils, siehe zum Beispiel DE 198 11 179 C.

Bei modernen Motorenkonzepten erfolgt die Betätigung der Gaswechselventile nicht mehr über eine Nockenwelle, sondern über Aktoren, wie beispielsweise Piezoaktoren, hydraulische Aktoren oder pneumatische Aktoren. Im Zusammenhang mit der Erfindung werden als Aktor alle Stellelemente unabhängig von deren physikalischem Wirkprinzip verstanden, welche die Öffnungsbewegung und die Schließbewegung eines Gaswechselventils ausführen können. Die Gaswechselventile werden von den Aktoren desmodromisch, d. h. zwangsweise, geöffnet und geschlossen. Deshalb ist es erforderlich, eine Verbindung zwischen Aktor und Gaswechselventil herzustellen, welche die zum Öffnen und Schließen des Gaswechselventils erforderlichen Kräfte sicher übertragen kann.

Der Erfindung liegt die Aufgabe zugrunde, eine einfache, kostengünstig herstellbare und zuverlässige Verbindung zwischen Gaswechselventil und Aktor bereitzustellen. Dabei soll die Verbindung mehrfach lösbar und schließbar sein und außerdem nur geringe Änderungen am Gaswechselventil und am Zylinderkopf bereits in Serie gefertigter Brennkraftmaschinen erfordern.

Diese Aufgabe wird erfindungsgemäß gelöst durch eine Verbindung eines Gaswechselventils einer Brennkraftmaschine mit einem Aktor, mit einem Schaft und einem Kupplungsstück, wobei an dem Schaft mindestens eine Umfangsnut vorhanden ist, wobei das Kupplungsstück eine Bohrung aufweist, deren Durchmesser in montiertem Zustand dem Durchmesser des Schafts entspricht, wobei die Bohrung mindestens einen mit der mindestens einen Umfangsnut formschlüssig verbindbaren umlaufenden Wulst aufweist, und wobei das Kupplungsstück im Bereich des Wulstes mindestens einen Längsschlitz aufweist.

### Vorteile der Erfindung

Die erfindungsgemäße Verbindung von Gaswechselventil und Aktor beruht auf einen Formschluss, der in beide Betätigungsrichtungen des Aktors (Öffnen und Schließen des Gaswechselventils) gleich hoch belastbar ist. Außerdem kann bei der erfindungsgemäßen Verbindung ein herkömmliches Gaswechselventil eingesetzt werden, da die Kopplung des Gaswechselventils mit der Ventilfeder ebenfalls Umfangsnuten im Bereich des Schafts des Gaswechselventils vorsieht. Ein weiterer Vorteil der erfindungsgemäßen Verbindung besteht darin, dass die Zahl der Bauteile sehr gering ist, was Herstellung und Montage sowie Reparaturen vereinfacht. Außerdem kann bei der erfindungsgemäßen Verbindung eine Rotation des Gaswechselventils in gleicher Weise wie bei herkömmlichen Brennkraftmaschinen erreicht werden.

Zur Erhöhung der zwischen Aktor und Gaswechselventil übertragbaren Kräfte kann es vorgesehen sein, dass der Schaft mehrere in Längsrichtung voneinander beabstandete Umfangsnuten aufweist. Entsprechend weist die Bohrung mehrere in Längsrichtung voneinander beabstandete Wülste auf.

Bei einer Variante der Erfindung ist vorgesehen, dass der Schaft im Bereich der mindestens einen Umfangsnut zylindrisch ausgebildet ist, und dass die Bohrung zylindrisch ausgebildet ist, so dass eine fertigungstechnisch besonders einfache Lösung verfügbar ist. Alternativ können der Schaft im Bereich der mindestens einen Umfangsnut und die Bohrung kegelstumpfförmig ausgebildet sein.

Weitere Ergänzungen der Erfindung sehen vor, die mindestens eine Umfangsnut mit einem halbkreisförmigen, rechteckigen oder trapezförmigen Querschnitt auszuführen, so dass je nach den gestellten Anforderungen hinsichtlich Fertigung, Montage und den zu übertragenden Kräfte eine optimale Variante ausgewählt werden kann.

Um ein Lösen der erfindungsgemäßen Verbindung im Betrieb zu unterbinden, kann die Verwendung eines Sicherungselements vorgesehen sein.

Bei einer weiteren Variante der Erfindung ist das Sicherungselement als offener Drahtring ausgebildet und weist das Kupplungsstück an seiner Außenfläche mindestens eine Nut zur Aufnahme des Sicherungsrings auf, so dass die Verbindung durch Aufschieben des Drahtrings in die Nut gesichert wird.

Bei einer anderen Ausgestaltung der Erfindung ist das Sicherungselement als Mutter ausgebildet und weist das Kupplungsstück an seiner Außenfläche ein mit der Mutter zusammenwirkendes Außengewinde auf, so dass durch Aufdrehen der Mutter auf das Außengewinde das Lösen der erfindungsgemäßen Verbindung verhindert wird.

In weiterer Ergänzung der Erfindung kann das Sicherungselement als Hülse ausgebildet sein, die über das Kupplungsstück schiebbar ist. Es kann auch vorgesehen sein, dass Hülse und Kupplungsstück in montiertem Zustand miteinander verpresst werden und somit einen Presssitz bilden. Bei dieser fertigungstechnisch sehr einfachen Lösung kann wirkungsvoll verhindert werden, dass sich das Sicherungselement im Betrieb vom Kupplungsstück löst und außerdem wird wegen des zum Herstellen einer Pressverbindung erforderlichen Werkzeugs sichergestellt, dass nur autorisierte Werkstätten Reparaturen an dem Aktor bzw. dem Gaswechselventil ausführen.

Zur Vereinfachung der Montage kann es vorgesehen sein, dass das Kupplungsstück im Bereich des mindestens eines Wulstes gegenüber dem montierten Zustand aufgeweitet ist und dass das Kupplungsstück durch das Sicherungselement bei der Montage zusammengedrückt wird. Anders als bei den zuvor beschriebenen Ausführungsbeispielen ist die Verbindung zwischen Gaswechselventil und Aktor bei dieser Variante nicht als Schnappverbindung ausgeführt, sondern wird der Formschluss erst durch das Zusammendrücken des Kupplungsstücks und das anschließende Aufschieben des Sicherungselements hergestellt.

Es ist erfindungsgemäß vorgesehen, dass der Schaft Teil des Gaswechselventils ist, und dass das Kupplungsstück Teil des Aktors ist. Allerdings ist es auch möglich, dass das Kupplungsstück Teil des Gaswechselventils ist und dass der Schaft Teil des Aktors ist. Schließlich ist es auch möglich, ein als Durchsteckventil ausgeführtes Gaswechselventil mit der erfindungsgemäßen Verbindung mit dem Aktor zu koppeln.

Weitere Vorteile und vorteilhafte Ausgestaltung der Erfindung sind der nachfolgenden Zeichnung, deren Beschreibung und den Patentansprüchen entnehmbar.

### Zeichnung

Es zeigen
- Figur 1: eine Gesamtansicht eines ersten Ausführungsbeispiels einer erfindungsgemäßen Vebindung mit kurzem Schaft des Gaswechselventils;
- Fiur 2: eine Gesamtansicht eines zweiten Ausführungsbeispiels einer erfindungsgemäßen Verbindung mit einem Durchsteckventil; und
- Figuren 3 bis 6: verschiedene Ausführungsbeispiele der erfindungsgemäßen Verbindung im Detail.

### Beschreibung der Ausführungsbeispiele

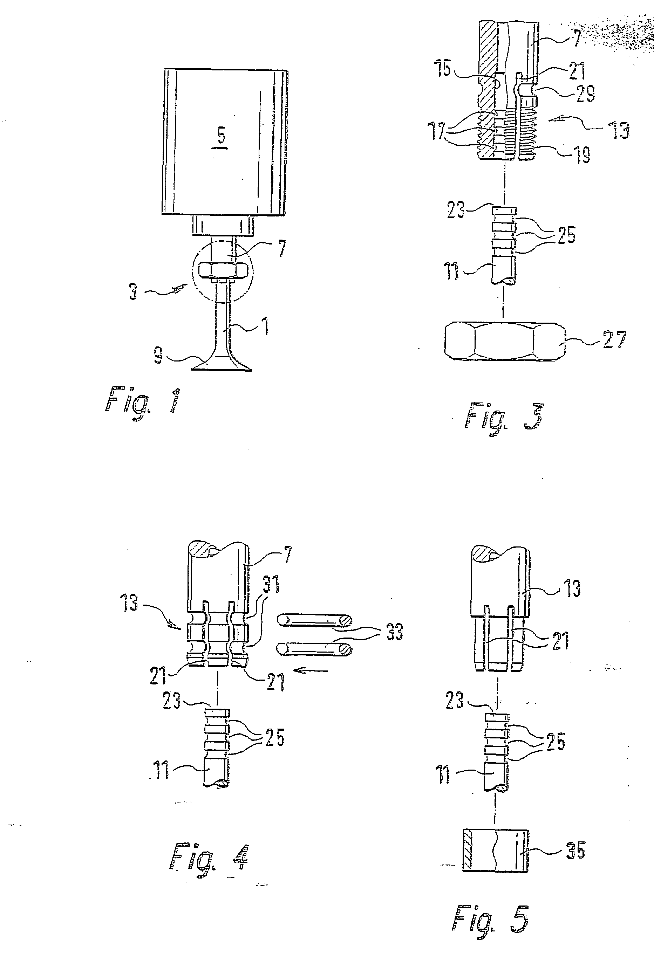

In Figur 1 ist ein Gaswechselventil 1 dargestellt, welches über eine Verbindung 3 mit einem Aktor 5 gekoppelt ist. Ein Stellglied 7 des Aktors 5 führt die Steuerbewegungen aus, welche über die Verbindung 3 auf das Gaswechselventil 1 übertragen werden sollen. Nicht dargestellt in Figur 1 ist ein Ventilsitz im ebenfalls nicht dargestellten Zylinderkopf der Brennkraftmaschine, an dem ein Ventilteller 9 des Gaswechselventils 1 im geschlossenen Zustand desselben anliegt. Die Verbindung 3 wird nachfolgend anhand der Figuren 3 bis 6 noch im Detail erläutert.

In Figur 2 ist ein als sogenanntes "Durchsteckventil" ausgeführtes Gaswechselventil 1 dargestellt, welches mit seinem Schaft 11 durch den Aktor 5 hindurchragt und bei dem das Stellglied 7 an der dem Ventilteller 9 abgewandten Seite des Aktors 5 angeordnet ist.

In Figur 3 ist ein erstes Ausführungsbeispiel einer erfindungsgemäßen Verbindung 3 als Explosionszeichnung im Detail dargestellt. Ein Kupplungsstück 13, welches an das Stellglied 7 des Aktors 5 anschließt, ist in Figur 3 im Teilschnitt dargestellt. Das Kupplungsstück 13 weist eine zylindrische Bohrung 15 auf. In der Bohrung 15 sind drei in Längsrichtung der Bohrung 15 voneinander beabstandete Wülste 17 vorhanden.

Am Außendurchmesser des Kupplungsstücks 13 ist ein Außengewinde 19 vorhanden. Das Kupplungsstück 13 ist in Längsrichtung mehrfach geschlitzt. In Figur 3 ist lediglich ein Schlitz 21 erkennbar. In den Figuren 4 und 5 sind die Schlitze 21 deutlich zu erkennen.

Unterhalb des Kupplungsstücks 13 ist ein Schaft 11 eines Gaswechselventils 1 dargestellt. An einem Ende 23 des Schafts 11, welches dem Ventilteller (nicht dargestellt in Figur 3) abgewandt ist, sind mehrere Umfangsnuten 25 angeordnet. Abmessung und Abstand der Umfangsnuten 25 voneinander entsprechen den Abmessungen und den Abständen der Wülste 17 in der Bohrung 15 des Kupplungsstücks 13.

Wenn nun der Schaft 11 von unten in die Bohrung 15 eingeschoben wird, weitet sich das Kupplungsstück 13 aus, was wegen der Schlitze 21 ohne weiteres möglich ist. Sobald der Schaft 11 eine Position erreicht hat, in der die Wülste 17 in die Umfangsnuten 25 einrasten, kehrt das Kupplungsstück 13 wieder in seine ursprüngliche Gestalt zurück und es entsteht ein Formschluss zwischen den Wülsten 17 des Kupplungsstücks 13 und den Umfangsnuten 25 des Schafts 11. Die Umfangsnuten 25 können einen halbkreisförmigen, rechteckigen oder trapezförmigen Querschnitt haben. Es ist auch denkbar, dass die Flanken der Umfangsnuten verschiedene Winkel zur Längsachse einschließen, wenn beispielsweise die zu übertragenden Kräfte beim Öffnen und Schließen des Gaswechselventils unterschiedlich sind. Es ist auch möglich, das Kupplungsstück 13 am Gaswechselventil 1 und die Umfangsnuten 25 an dem Stellglied 7 vorzusehen.

Um zu verhindern, dass sich die formschlüssige Verbindung zwischen Kupplungsstück 13 und Schaft 11 im Betrieb löst, wird nach dem Einführen des Schafts 11 in die Bohrung 15 eine Mutter 27 auf das Außengewinde 19 des Kupplungsstücks aufgeschraubt und angezogen. Es empfiehlt sich, Außengewinde 19 und Mutter 27 als Feingewinde auszuführen, um ein Lösen der Mutter 27 mit Sicherheit zu unterbinden. Selbstverständlich können zusätzlich alle bekannten Schraubensicherungen angewandt werden, um ein unbeabsichtigtes Lösen der Mutter 27 zu verhindern.

Oberhalb des Außengewindes 19 ist am Kupplungsstück 13 ein Einstich 29 vorgesehen, welcher dazu dient, das Aufweiten des Kupplungsstücks 13 zu erleichtern.

In Figur 4 ist ein zweites Ausführungsbeispiel einer erfindungsgemäßen Verbindung ebenfalls in Explosionsdarstellung dargestellt. Die Innenkontur des Kupplungsstücks 13 entspricht der Innenkontur des Kupplungsstücks 13 gemäß dem Ausführungsbeispiel nach Figur 3 und ist in Figur 4 nicht sichtbar. Auch ist der Schaft 11 mit mehreren voneinander beabstandeten Umfangsnuten 25 genauso ausgeführt wie anhand des Ausführungsbeispiels gemäß Fig. 3 erläutert.

In Figur 4 sind die Schlitze 21, welche das Aufweiten des Kupplungsstücks 13 erleichtern, wenn der Schaft 11 in das Kupplungsstück 13 eingeführt wird, gut zu erkennen. Die Zahl der Schlitze 21 kann nach Bedarf gewählt werden.

In das Kupplungsstück 13 gemäß dem Ausführungsbeispiel nach Figur 4 sind am Außenumfang zwei Nuten 31 eingebracht. Wenn der Schaft 11 in das Kupplungsstück 13 eingeführt wurde, werden über das Kupplungsstück 13 zwei Sicherungsringe 33 in die Nuten 31 eingelegt. Die Sicherungsringe 33 können als offener Drahtring ausgeführt sein. Die Sicherungsringe 33 werden so dimensioniert und hergestellt, dass sie das Kupplungsstück zusammendrücken, wenn sie in den Nuten 31 liegen. Dadurch wird ein ungewolltes Lösen der Verbindung zwischen Kupplungsstück 13 und Schaft 11 auf einfache und wirkungsvolle Weise unterbunden.

In Figur 5 ist ein weiteres Ausführungsbeispiel einer erfindungsgemäßen Verbindung zwischen Kupplungsstück 13 und Schaft 11 dargestellt. Die nicht sichtbare Kontur der Bohrung im Kupplungsstück 13 entspricht ebenfalls der Kontur der Bohrung 13 gemäß dem Ausführungsbeispiel nach Figur 3. Das Kupplungsstück 13 ist im Bereich der Schlitze 21 zylindrisch ausgeführt. Wenn der Schaft 11 in das Kupplungsstück 13 eingeführt wurde, wird über das Kupplungsstück 13 im Bereich der Schlitze 21 eine Hülse 35 aufgeschoben, die Hülse 35 ist in Fig. 5 im Teilschnitt dargestellt. Zwischen dem Kupplungsstück 13 und der Hülse 35 entsteht beim Aufschieben ein Presssitz, so dass die Hülse 35 sicher auf dem Kupplungsstück 13 festsitzt. Alternativ kann die Hülse 35 auch nach dem Aufschieben auf das Kupplungsstück 13 verpresst werden.

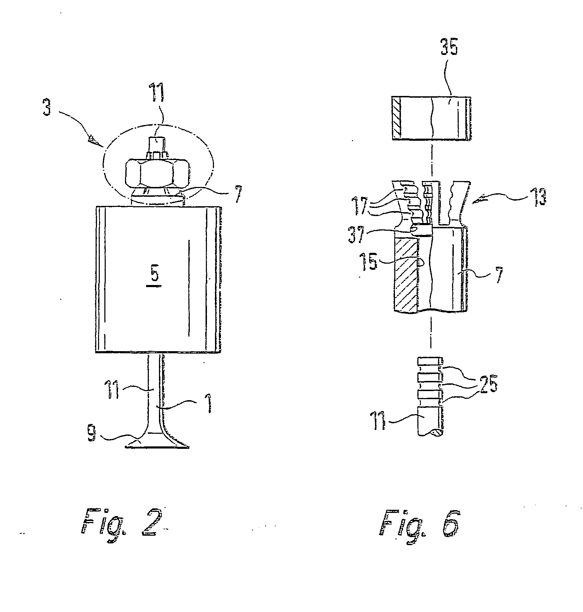

In Figur 6 ist ein weiteres Ausführungsbeispiel einer erfindungsgemäßen Verbindung dargestellt. Bei diesem Ausführungsbeispiel wird der Schaft 11 von unten durch das Stellglied 7 und durch das Kupplungsstück 13 hindurchgeschoben. Das Kupplungsstück 13 ist im Teilschnitt dargestellt. Das Kupplungsstück 13 ist im Bereich der Wülste 17 soweit aufgeweitet, dass der Schaft 11 frei durch die Bohrung 15 in seine Einbauposition geschoben werden kann. Anschließend wird das Kupplungsstück 13 zusammengedrückt, so dass die Wülste 17 in den Umfangsnuten 25 einrasten und eine Hülse 35 von oben aufgeschoben werden kann. In der Bohrung 15 ist ein Freistich 37 vorgesehen, welcher das Aufweiten bzw. Zusammendrücken des Kupplungsstücks 13 erleichtert.

Selbstverständlich sind alle anderen Arten von Sicherungselementen, wie beispielsweise die Sicherungsringe 33 oder die Mutter 27 ebenfalls bei den Ausführungsformen des Kupplungsstücks 13 anwendbar, bei denen das Kupplungsstück aufgeweitet wird. Auch ist das Aufweiten des Kupplungsstücks 13 nicht auf den Einsatz von Durchsteckventilen beschränkt, sondern kann ebenfalls bei einer Konfiguration gemäß Figur 1 eingesetzt werden.

## Patentansprüche

1. Verbindung eines Gaswechselventils einer Brennkraftmaschine mit einem Aktor, mit einem Schaft (11) und einem Kupplungsstück (13), wobei an dem Schaft (11) mindestens eine Umfangsnut (25) vorhanden ist, **dadurch gekennzeichnet, dass** das Kupplungsstück (13) eine Bohrung (15) aufweist deren Durchmesser in montiertem Zustand dem Durchmesser des Schafts (11) entspricht, dass die Bohrung (15) mindestens einen mit der mindestens einen Umfangsnut (25) formschlüssig verbindbaren umlaufenden Wulst (17) aufweist, und dass das Kupplungsstück (13) im Bereich des Wulstes (17) mindestens einen Schlitz (21) in Längsrichtung des Kupplungsstücks (13) aufweist.

2. Verbindung nach Anspruch 1, **dadurch gekennzeichnet, dass** der Schaft (11) mehrere in Längsrichtung des Schafts (11) voneinander beabstandete Umfangsnuten (25) aufweist, und dass die Bohrung (15) mehrere in Längsrichtung voneinander beabstandete Wülste (17) aufweist.

3. Verbindung nach Anspruch 1 oder 2, **dadurch gekennzeichnet, dass** der Schaft (11) im Bereich der mindestens einen Umfangsnut (25) zylindrisch ausgebildet ist, und dass die Bohrung (15) zylindrisch ausgebildet ist.

4. Verbindung nach einem der vorhergehenden Ansprüche, **dadurch gekennzeichnet, dass** der Schaft (11) im Bereich der mindestens einen Umfangsnut (25) kegelstumpfförmig ausgebildet ist, und dass die Bohrung (15) kegelstumpfförmig ausgebildet ist.

5. Verbindung nach einem der vorhergehenden Ansprüche, **dadurch gekennzeichnet, dass** die mindestens eine Umfangsnut (25) einen halbkreisförmigen, rechteckigen oder trapezförmigen Querschnitt aufweist.

6. Verbindung nach einem der vorhergehenden Ansprüche, **dadurch gekennzeichnet, dass** ein Sicherungselement vorhanden ist, welches das Lösen der Verbindung von Schaft (11) und Kupplungsstück (13) verhindert.

7. Verbindung nach Anspruch 6, **dadurch gekennzeichnet, dass** das Sicherungselement als Drahtring (33) ausgebildet ist, und dass das Kupplungsstück (13) an seiner Außenfläche () mindestens eine Nut (31) zur Aufnahme des Sicherungsrings (33) aufweist.

8. Verbindung nach Anspruch 6, **dadurch gekennzeichnet, dass** das Sicherungselement als Mutter (27) ausgebildet ist, und dass das Kupplungsstück (13) ein mit der Mutter (27) zusammenwirkendes Außengewinde (19) aufweist.

9. Verbindung nach Anspruch 6, **dadurch gekennzeichnet, dass** das Sicherungselement (33) als Hülse (35) ausgebildet ist, und dass die Hülse (35) über das Kupplungsstück (13) schiebbar ist.

10. Verbindung nach Anspruch 9, **dadurch gekennzeichnet, dass** Hülse (35) und Kupplungsstück (13) in montiertem Zustand einen Presssitz bilden.

11. Verbindung nach einem der Ansprüche 6 bis 10, **dadurch gekennzeichnet, dass** das Kupplungsstück (13) im Bereich des mindestens einen Wulstes (17) gegenüber dem montiertem Zustand aufgeweitet ist, und dass das Kupplungsstück (13) durch das Sicherungselement (27, 33, 35) zusammengedrückt wird.

12. Verbindung nach einem der vorhergehenden Ansprüche, **dadurch gekennzeichnet, dass** der Schaft (11) Teil des Gaswechselventils (1) ist, und dass das Kupplungsstück (13) Teil des Aktors (5) ist.

13. Verbindung nach einem der Ansprüche 1 bis 11, **dadurch gekennzeichnet, dass** das Kupplungsstück (13) Teil des Gaswechselventils (1) ist, und dass der Schaft (11) Teil des Aktors (5) ist.

## Claims

1. Connection of a gas exchange valve of an internal combustion engine to an actuator, with a shank (11) and with a coupling piece (13), at least one circumferential groove (25) being present on the shank (11), **characterized in that** the coupling piece (13) has a bore (15), the diameter of which corresponds, in the mounted state, to the diameter of the shank (11), **in that** the bore (15) has at least one peripheral bead (17) connectable positively to the at least one circumferential groove (25), and **in that** the coupling piece (13) has, in the region of the bead (17), at least one slot (21) in the longitudinal direction of the coupling piece (13).

2. Connection according to Claim 1, **characterized in that** the shank (11) has a plurality of circumferential grooves (25) spaced apart from one another in the longitudinal direction of the shank (11), and **in that** the bore (15) has a plurality of beads (17) spaced apart from one another in the longitudinal direction.

3. Connection according to Claim 1 or 2, **characterized in that** the shank (11) is designed cylindrically in the region of the at least one circumferential groove (25), and **in that** the bore (15) is designed cylindrically.

4. Connection according to one of the preceding claims, **characterized in that** the shank (11) is designed frustoconically in the region of the at least one circumferential groove (25), and **in that** the bore (15) is designed frustoconically.

5. Connection according to one of the preceding claims, **characterized in that** the at least one circumferential groove (25) has a semicircular, rectangular or trapezoidal cross section.

6. Connection according to one of the preceding claims, **characterized in that** a securing element is present, which prevents the release of the connection of the shank (11) and coupling piece (13).

7. Connection according to Claim 6, **characterized in that** the securing element is designed as a wire ring (33), and **in that** the coupling piece (13) has on its outer face at least one groove (31) for receiving the securing ring (33).

8. Connection according to Claim 6, **characterized in that** the securing element is designed as a nut (27), and **in that** the coupling piece (13) has an external thread (19) cooperating with the nut (27).

9. Connection according to Claim 6, **characterized in that** the securing element (33) is designed as a sleeve (35), and **in that** the sleeve (35) can be pushed over the coupling piece (13).

10. Connection according to Claim 9, **characterized in that** the sleeve (35) and coupling piece (13) form a press fit in the mounted state.

11. Connection according to one of Claims 6 to 10, **characterized in that** the coupling piece (13) is widened in the region of the at least one bead (17), as compared with the mounted state, and **in that** the coupling piece (13) is pressed together by the securing elements (27, 33, 35).

12. Connection according to one of the preceding claims, **characterized in that** the shank (11) is part of the gas exchange valve (1), and **in that** the coupling piece (13) is part of the actuator (5).

13. Connection according to one of Claims 1 to 11, **characterized in that** the coupling piece (13) is part of the gas exchange valve (1), and **in that** the shank (11) is part of the actuator (5).

## Revendications

1. Liaison d'une soupape d'échange de gaz d'un moteur à combustion comprenant un actionneur, une tige (11) et une pièce de couplage (13), la tige (11) ayant au moins une rainure périphérique (25),
**caractérisée en ce que**
la pièce de couplage (13) a un perçage (15) dont le diamètre à l'état monté correspond au diamètre de la tige (11),
le perçage (15) a au moins un bourrelet (17) périphérique, qui se relie par une liaison par la forme à au moins une rainure périphérique (25), et
la pièce de couplage (13) présente au niveau du bourrelet (17), au moins une fente (21) dans la direction longitudinale de la pièce de couplage (13).

2. Liaison selon la revendication 1,
**caractérisée en ce que**
la tige (11) comporte plusieurs rainures périphériques (25) écartées les unes des autres dans la direction longitudinale de la tige (11), et
le perçage (15) comporte plusieurs bourrelets (17) écartés les uns des autres dans la direction longitudinale.

3. Liaison selon l'une quelconque des revendications 1 ou 2,
**caractérisée en ce qu'**
au niveau d'au moins une rainure périphérique (25), la tige (11) est de forme cylindrique et le perçage (15) est de forme cylindrique.

4. Liaison selon l'une quelconque des revendications précédentes,
**caractérisée en ce que**
dans la zone d'au moins une rainure périphérique (25), la tige (11) a une forme de tronc de cône et le perçage (15) a une forme de tronc de cône.

5. Liaison selon l'une quelconque des revendications précédentes,
**caractérisée en ce qu'**
au moins une rainure périphérique (25) a une section en forme de demi-cercle, de rectangle ou de trapèze.

6. Liaison selon l'une quelconque des revendications précédentes,
**caractérisée par**
un élément de fixation qui interdit la libération de la liaison entre la tige (11) et la pièce de couplage (13).

7. Liaison selon la revendication 6,
**caractérisée en ce que**
l'élément de fixation est une bague en fil (33) et la pièce de couplage (13) présente sur sa surface extérieure au moins une rainure (31) pour recevoir la bague de fixation (33).

8. Liaison selon la revendication 6,
**caractérisée en ce que**
l'élément de fixation est en forme d'écrou (27) et la pièce de couplage (13) comporte un filetage extérieur (19) coopérant avec l'écrou (27).

9. Liaison selon la revendication 6,
**caractérisée en ce que**
l'élément de fixation (33) est réalisé comme un manchon (35) qui se glisse sur la pièce de couplage (13).

10. Liaison selon la revendication 9,
**caractérisée en ce que**
le manchon (35) et la pièce de couplage (13) constituent un siège pressé lorsqu'ils sont assemblés.

11. Liaison selon l'une quelconque des revendications 6 à 10,
**caractérisée en ce que**
la pièce de couplage (13) présente au niveau d'au moins un bourrelet (17), un état élargi par rapport à l'état monté et la pièce de couplage (13) se comprime par l'élément de fixation (27, 33, 35).

12. Liaison selon l'une quelconque des revendications précédentes,
**caractérisée en ce que**
la tige (11) est une partie de la soupape d'échange de gaz (1) et la pièce de couplage (13) fait partie de l'actionneur (5).

13. Liaison selon l'une quelconque des revendications 1 à 11,
**caractérisée en ce que**
la pièce de couplage (13) fait partie de la soupape d'échange de gaz (1) et la tige (11) fait partie de l'actionneur (5).
